# EUROPÄISCHE PATENTSCHRIFT

(11) **EP 1 844 428 B1**
(45) Veröffentlichungstag und Bekanntmachung des Hinweises auf die Patenterteilung: **16.12.2009**
(21) Anmeldenummer: 06705764.6
(22) Anmeldetag: 11.01.2006
(51) Int. Cl.: G06K 19/077

(54) **PASSDOKUMENT**
IDENTIFICATION DOCUMENT
DOCUMENT D'IDENTITE

(30) Priorität: 02.02.2005 DE 102005004986
(43) Veröffentlichungstag der Anmeldung: 17.10.2007
(73) Patentinhaber: Bundesdruckerei GmbH, 10958 Berlin (DE)
(72) Erfinder: MORIAN, Thomas, 16548 Glienicke (DE); SENGE, Carsten, 24105 Kiel (DE)
(74) Vertreter: Ostermann, Thomas
(86) Internationale Anmeldenummer: PCT/DE2006/000025
(87) Internationale Veröffentlichungsnummer: WO 2006/081787

(56) Entgegenhaltungen:
- EP-A- 1 295 733
- EP-A- 1 329 843
- DE-U1- 29 819 389

## Beschreibung

Die Erfindung betrifft ein Passdokument mit einem Passdokumentenkörper enthaltend als Sicherheitsmerkmal ein Lichtbild des Inhabers des Passdokumentes und einen Identifikations-Chip zur Speicherung von den Inhaber des Passdokumentes identifizierenden Merkmalen.

Aus der EP 1 329 843 A2 ist ein Passdokument mit einem Passdokumentenkörper bekannt, der eine Mehrzahl von Papierseiten aufweist. Als Sicherheitsmerkmal ist auf einer der Seiten ein Lichtbild des Inhabers des Passdokumentes dargestellt. Ein weiteres Sicherheitsmerkmal wird durch einen Identifikations-Chip gebildet, der in einer Seite des Passdokumentkörpers eingebettet ist. Der Identifikations-Chip dient zur Speicherung von den Inhaber des Passdokuments identifizierenden Merkmalen. Die Sicherheitsmerkmale sind fest in den Passdokumentenkörper integriert und lassen keine zusätzliche Passfunktion zu.

Aus der DE 298 19 389 U1 ist eine Chipkarte für den Einsatz in Mobiltelefonen bekannt. Die Chipkarte weist einen einen ersten Chip aufweisenden Kartenkörper auf, der mit einer einen zweiten Chip aufweisenden Minichipkarte lösbar verbunden ist. Die bekannte Karte enthält somit zwei unterschiedliche Kartentypen, die zum Telefonieren nach unterschiedlichen Standards geeignet sind. Für die kleine dimensionierte Minichipkarte dient der Kartenkörper als Träger für die Aufbewahrung derselben.

Aus der DE 199 22 063 A1 ist eine Adapterkarte zur Anpassung einer Chipkarte an einen vorgegebenen Standard bekannt. Die Adapterkarte ermöglicht den Betrieb der standardgemäßen Chipkarte an einer anderen Versorgungsspannung. Hierzu weist die Adapterkarte eine Ausnehmung auf, in der die Chipkarte klemmend gehaltert ist.

Aus der DE 692 26 343 T3 ist eine Trägerkarte für eine Minichipkarte bekannt. Der Träger weist eine Ausnehmung zur Aufbewahrung der Minichipkarte auf, damit diese besser vor Verlust geschützt ist.

Aufgabe der vorliegenden Erfindung ist es, ein Passdokument derart weiterzubilden, dass zum einen die Funktionalität des Passdokumentes erweitert und zum anderen der Personalisierungsaufwand verringert wird.

Zur Lösung dieser Aufgabe ist die Erfindung in Verbindung mit dem Oberbegriff des Patentanspruchs 1 **dadurch gekennzeichnet, dass** der Passdokumentenkörper einen Satelliten-Datenträger enthaltend zum einen den Identifikations-Chip und zum anderen zumindest das Lichtbild des Inhabers als erste Sicherheitsmerkmale und einen Basis-Datenträger enthaltend mindestens ein zweites Sicherheitsmerkmal umfasst, wobei der Satelliten-Datenträger mit dem Basis-Datenträger lösbar verbunden ist.

Die Erfindung ermöglicht das kostengünstige Bereitstellen von zwei Identifikationsträgern, nämlich einem Satelliten-Datenträger und einem Basis-Datenträger, die jeweils über unterschiedliche Sicherheitsmerkmale verfügen. Durch Kombination dieser auf unterschiedlichen Datenträgern aufgebrachten Sicherheitsmerkmalen können zum einen erhöhte Sicherheitsstandards erfüllt bzw. Kosten sparende Redundanzen erzeugt werden. Die Redundanz kann darin bestehen, dass auf dem Satelliten-Datenträger aufgebrachte bzw. integrierte Sicherheitsmerkmale für eine Identifikationsfunktion im Zusammenhang mit dem Basis-Datenträger genutzt wird. Dadurch, dass der Satelliten-Datenträger lösbar mit dem Basis-Datenträger verbunden ist, kann der Satelliten-Datenträger für eine Identifikationsfunktion (Passfunktion) unabhängig von dem Basis-Datenträger autark eingesetzt werden.

Nach einer bevorzugten Ausführungsform der Erfindung weist der Basis-Datenträger eine Aufnahmeeinheit auf zur Aufnahme des Satelliten-Datenträgers. Die Aufnahmeeinheit ist derart gestaltet, dass ein solcher Bereich einer Flachseite des Satelliten-Datenträgers, der ein Sicherheitsmerkmal enthält, in der Aufnahmeposition erkennbar ist. Vorteilhaft kann somit das Sicherheitsmerkmal des Satelliten-Datenträgers für die Identifikationsfunktion des Passdokumentes, die sich von der Identifikationsfunktion des Satelliten-Datenträgers unterscheiden kann, genutzt werden. Das ansonsten erforderliche Aufbringen des entsprechenden Sicherheitsmerkmals auf den Satelliten-Datenträger einerseits und den Basis-Datenträger andererseits kann daher entfallen, was die Personalisierungskosten verringert. Die Kostenreduzierung ist besonders groß, wenn es sich bei dem Sicherheitsmerkmal um den Identifikations-Chip handelt, der für die Identifikationsfunktion (Passfunktion) des Satelliten-Datenträgers einerseits und für die weitere Identifikationsfunktion des den Satelliten-Datenträger enthaltenden Basis-Datenträgers anderseits genutzt wird.

Vorteilhaft kann der Basis-Datenträger Sicherheitsmerkmale aufweisen, die für die Identifikationsfunktion des Satelliten-Datenträgers nicht erforderlich sind, im Zusammenwirken mit den Sicherheitsmerkmalen des Satelliten-Datenträgers aber eine weitere Identifikationsfunktion erhöhter Sicherheit bereitstellen.

Nach einer Weiterbildung der Erfindung ist das erste Sicherheitsmerkmal in einem solchen Übereinstimmungsbereich des Satelliten-Datenträgers angeordnet, der mit einem Übereinstimmungsbereich des Basis-Datenträgers übereinstimmt, so dass in der Aufnahmeposition des Satelliten-Datenträgers das erste Sicherheitsmerkmal nutzbar ist für eine zweite Identifikationsfunktion des Basis-Datenträgers. Vorteilhaft braucht das erste Sicherheitsmerkmal nur einmalig auf den Satelliten-Datenträger aufgebracht werden und kann doppelt zum einen für eine erste Identifikationsfunktion mittels des Satelliten-Datenträgers und eine zweite Identifikationsfunktion mittels des mit dem Satelliten-Datenträger versehenen Basis-Datenträgers eingesetzt werden. Vorzugsweise ist die Aufnahmeeinheit derart ausgebildet, dass der Übereinstimmungsbereich an einem standardisierten Ort der jeweiligen Datenträger platziert ist.

Nach einer Weiterbildung der Erfindung weist die Aufnahmeeinheit des Basis-Datenträgers eine Aussparung mit Rastelementen auf, so dass der Satelliten-Datenträger klemmend in der Aussparung gehalten ist. Vorteilhaft kann hierdurch auf einfache Weise der Satelliten-Datenträger in den Basis-Datenträger wieder eingesetzt werden, um zum einen die Identifikationsfunktion des Basis-Datenträgers zu erfüllen und zum anderen dem Benutzer einen einzigen Aufbewahrungsort für zwei unterschiedliche Identitätsträger zu ermöglichen. Der Satelliten-Datenträger kann beispielsweise als Personalausweis; der Basis-Datenträger mit integriertem Satelliten-Datenträger kann beispielsweise als Reisepass dienen.

Nach einer Weiterbildung der Erfindung kann der Basis-Datenträger ein zugangsbezogenes Sicherheitsmerkmal aufweisen, das eine Zugangserlaubnis für den Zugriff auf den Identifikations-Chip des Satelliten-Datenträgers bildet. Auf diese Weise können erhöhte Sicherheitsanforderungen erfüllt werden.

Ein Ausführungsbeispiel der Erfindung wird nachfolgend anhand der Zeichnungen näher erläutert.

Es zeigen:
- Figur 1: eine Draufsicht auf ein erfindungsgemäßes Passdokument,
- Figur 2: eine Draufsicht auf einen Basis-Datenträger des Passdokumentes und
- Figur 3: einen teilweisen Querschnitt durch den Basis-Datenträger in einem Verbindungsbereich mit einem Satelliten-Datenträger entlang der Linie III-III in Figur 2.

Ein Passdokument mit einem Passdokumentenkörper 1 besteht im Wesentlichen aus einem Satelliten-Datenträger 2 und einem den Satelliten-Datenträger 2 aufnehmenden Basis-Datenträger 3. Der Satelliten-Datenträger 2 ist mittels einer Aufnahmeeinheit 4 des Basis-Datenträgers 3 kraft- und/oder stoffschlüssig mit dem Basis-Datenträger 3 lösbar verbunden.

Der Satelliten-Datenträger 2 ist in einem ID-1 Chipkartenformat gemäß ISO 7810 ausgebildet und weist als Personalausweiskarte eine Mehrzahl von personenbezogenen bzw. dokumentenbezogenen erste Sicherheitsmerkmalen 5 auf. Zur Bildung einer ersten Identifikationsfunktion (Personalausweis) des Satelliten-Datenträgers 2 sind als erste Sicherheitsmerkmale 5 auf einer Flachseite 6 des Satelliten-Datenträgers 2 ein Lichtbild 7 (personenbezogen), eine Klarschriftzone 8 (personenbezogen), eine maschinenlesbare Zeile 9 (personenbezogen) und Guillochen 10 (dokumentenbezogen) aufgebracht. Ferner weist der Satelliten-Datenträger 2 einen in den Kartenkörper des Satelliten-Datenträger 2 eingebetteten Identifikations-Chip auf, der zur Speicherung von dem Inhaber des Passdokumentes 1 identifizierenden Merkmalen dienen kann. Beispielsweise kann der Identifikations-Chip biometrische Merkmale, wie zum Beispiel einen Fingerabdruck des Passinhabers enthalten.

Der Basis-Datenträger 3 weist eine Anzahl von zweiten Sicherheitsmerkmalen 11 auf, die auf einer die Aufnahmeeinheit 4 umgebenden Flachseite 12 des Kartenkörpers 3 angeordnet sind. Die Mehrzahl von zweiten Sicherheitsmerkmalen 11 wird durch personenbezogene und/oder dokumentenbezogene Daten gebildet. Beispielsweise kann das Sicherheitsmerkmal 11 durch eine Mikroschrift 13 gebildet sein, die personenbezogene und/oder dokumentenbezogene Buchstaben aufweist, die nur mittels einer Lupe erkennbar sind. Ferner kann eine Oberflächenprägung 14 vorgesehen sein, die als Sicherheitsprägung dem Basis-Datenträger eine reliefartig fühlbare Oberfläche liefert. Mittels einer Laserbeschriftung 15 kann der Name und der Vorname des Inhabers des Passdokumentes in den Kartenkörper eingebracht sein.

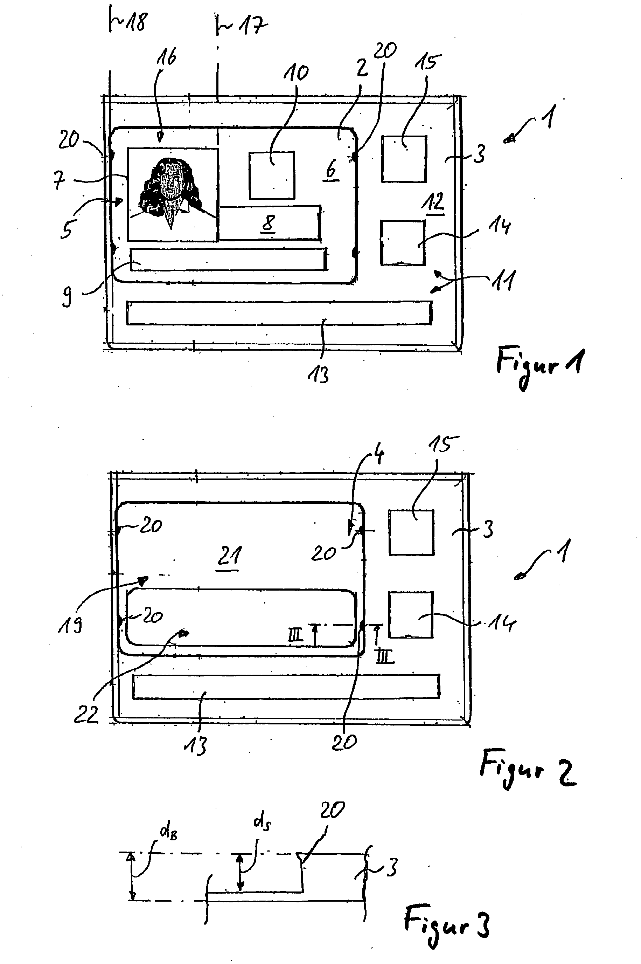

Befindet sich der Satelliten-Datenträger 2 in der Aufnahmeposition gemäß Figur 1, dient der Basis-Datenträger 3 in Kombination mit dem Satelliten-Datenträger 2 zur Bildung einer zweiten Identifikationsfunktion, in der vorzugsweise die ersten Sicherheitsmerkmale 5 des Satelliten-Datenträgers 2 und die zweiten Sicherheitsmerkmale 11 des Basis-Datenträgers 3 kombiniert werden. Vorteilhaft kann das Lichtbild 7 sowie die in der Klarschriftzone 8 vorgesehene Klarschrift des Inhabers auch für die zweite Identifikationsfunktion genutzt werden. Zu diesem Zweck sind die Lichtbildzone/das Lichtbild 7 und die Klarschriftschriftzone 8 in einem vordefinierten Übereinstimmungsbereich 16 des Satelliten-Datenträgers 2 angeordnet, so dass in der Aufnahmeposition des Satelliten-Datenträgers 2 das Lichtbild 7 und die Klarschriftzone 8 in dem vorgesehenen Bereich zur Nutzung der zweiten Identifikationsfunktion (Reisepassfunktion) angeordnet sind. Hierzu erstreckt sich eine rechte Seite des Lichtbildes 7 bzw. eine linke Seite der Klarschriftzone 8 entlang einer Bezugslinie 17, die einen vorgegebenen Abstand zu einer Randkante 18 des Satelliten-Datenträgers 2 sowie der Aufnahmeeinheit 4 hat. In diesem Übereinstimmungsbereich 16 sind das Lichtbild 7 und die Klarschriftzone 8 deckungsgleich zum einen für die erste Identifikationsfunktion des Satelliten-Datenträgers 2 und zum anderen für die zweite Identifikationsfunktion des Basis-Datenträgers 3 in Kombination mit dem Satelliten-Datenträger 2.

Wie aus den Figuren 2 und 3 zu ersehen ist, weist die Aufnahmeeinheit 4 eine Aussparung 19 auf, die mit Rastelementen 20 versehen ist. Die Rastelemente 20 sind als an der Flachseite 12 vorspringende Rastnasen ausgebildet und verteilt am Rand der Aussparung 19 angeordnet. Auf diese Weise ist der Satelliten-Datenträger 2 klemmend in der Aussparung 19 des Basis-Datenträgers 3 gehalten.

Die Aussparung 19 weist eine dicke d_{S} auf, die zu der Dicke des Satelliten-Datenträgers 2 korrespondiert. Der Satelliten-Datenträger 2 kann eine Dicke von 0,78 mm aufweisen. Der Basis-Datenträger 3 kann eine Dicke d_{B} von 0,9 mm aufweisen. Eine Rückseite des Satelliten-Datenträgers 2 liegt somit geschützt auf einer Bodenseite 21 der Aussparung 19 an. Die Bodenseite 21 kann einen ovalförmigen Durchbruch 22 aufweisen, damit der Satelliten-Datenträger 2 von der Rückseite des Basis-Datenträgers 3 her vereinfacht herausgedrückt werden kann.

Nach einer nicht dargestellten alternativen Ausführungsform kann die Aufnahmeeinheit 4 auch als eine Tasche ausgebildet sein mit einem entlang einer Stirnseite des Basis-Datenträgers 3 verlaufenden Schlitz zum Einsetzen bzw. Herausziehen des Satelliten-Datenträgers 2 in bzw. aus der Tasche. Alternativ kann die Tasche auch mittels eines entlang einer Längsseite des Basis-Datenträgers 3 verlaufenden Schlitzes zugänglich sein. Nach einer alternativen Ausführungsform kann die Tasche durch eine Laminatschicht, beispielsweise eine holographische Laminatschicht gebildet sein. Die Tasche kann die Dimension des Lichtbildes aufweisen und deckungsgleich zu dem vorgesehen Lichtbild des Passdokumentes sein. Alternativ kann die Tasche auch neben dem vorgesehenen Ort für das Lichtbild angeordnet sein. Die Dicke der Tasche beträgt mindestens die Dicke der Laminatschicht bzw. der holographischen Laminatschicht.

Nach einer nicht dargestellten Ausführung der Erfindung können der Satelliten-Datenträger 2 und der Basis-Datenträger 3 eine gleiche Seriennummer aufweisen, die dem Nutzer eine direkte Zuordnung der beiden Datenträger 2 und 3 zueinander ermöglicht. Alternativ können beide Datenträger 2, 3 auch gleiche graphische Symbole aufweisen, die mittels eines Lasers auf eine obere oder untere Schicht der Datenträger 2, 3 aufgebracht sind.

Nach einer weiteren Ausführungsform der Erfindung kann der Basis-Datenträger 3 auch ein zugangsbezogenes Sicherheitsmerkmal, beispielsweise eine OCR-Zeile aufweisen, die maschinell erfasst und mit einem in den Identifikations-Chip des Satelliten-Datenträgers 2 gespeicherten Codes verglichen wird. Erst bei Feststellung der Übereinstimmung mit dem Code wird ein Zugriff auf den Identifikations-Chip erlaubt. Im anderen Fall wird die Prüfung abgebrochen.

Der Satelliten-Datenträger 2 und der Basis-Datenträger 3 sind vorzugsweise aus einem Kunststoffmaterial und sind durch Spritzgießen hergestellt.

## Patentansprüche

1. Passdokument mit einem Passdokumentenkörper enthaltend als Sicherheitsmerkmal ein Lichtbild des Inhabers des Passdokumentes und einen Identifikations-Chip zur Speicherung von den Inhaber des Passdokumentes identifizierenden Merkmalen, **dadurch gekennzeichnet, dass** der Passdokumentenkörper (1) einen
- Satelliten-Datenträger (2) enthaltend zum einen den Identifikations-Chip und zum anderen zumindest das Lichtbild (7) des Inhabers als erste Sicherheitsmerkmale (5),
- Basis-Datenträger (3) enthaltend mindestens ein zweites Sicherheitsmerkmal (11)
umfasst, wobei der Satelliten-Datenträger (2) mit dem Basis-Datenträger (3) lösbar verbunden ist.

2. Passdokument nach Anspruch 1, **dadurch gekennzeichnet, dass** der Basis-Datenträger (3) eine Aufnahmeeinheit (4) aufweist zur Aufnahme des Satelliten-Datenträgers (2), derart, dass mindestens ein solcher Bereich einer Flachseite (6) des Satelliten-Datenträgers (2), der das erste Sicherheitsmerkmale (5) enthält, in der Aufnahmeposition des Satelliten-Datenträgers (2) erkennbar ist.

3. Passdokument nach Anspruch 1 oder 2, **dadurch gekennzeichnet, dass** der Satelliten-Datenträger (2) eine Mehrzahl von ersten Sicherheitsmerkmalen (5) umfasst zur Bildung einer unabhängigen ersten Identifikationsfunktion.

4. Passdokument nach einem der Ansprüche 1 bis 3, **dadurch gekennzeichnet, dass** das erste Sicherheitsmerkmal (5) in einem solchen Übereinstimmungsbereich (16) der Flachseite (6) des Satelliten-Datenträgers (2) angeordnet und/oder die Aufnahmeeinheit (4) derart ausgebildet ist, dass in der Aufnahmeposition des Satelliten-Datenträgers (2) das erste Sicherheitsmerkmal (5) nutzbar ist für eine zweite Identifikationsfunktion des Basis-Datenträgers (3).

5. Passdokument nach einem der Ansprüche 1 bis 4, **dadurch gekennzeichnet, dass** in dem Übereinstimmungsbereich (16) die Lichtbildzone (7) und/oder eine Klarschriftzone (8) angeordnet sind.

6. Passdokument nach einem der Ansprüche 1 bis 5, **dadurch gekennzeichnet, dass** der Satelliten-Datenträger (2) kraftschlüssig und/oder formschlüssig mit dem Basis-Datenträger (3) verbunden ist.

7. Passdokument nach einem der Ansprüche 1 bis 6, **dadurch gekennzeichnet, dass** die Aufnahmeeinheit (4) eine Aussparung (19) aufweist, deren Dimension auf die Kontur des Satelliten-Datenträgers (2) abgestimmt ist.

8. Passdokument nach einem der Ansprüche 1 bis 7, **dadurch gekennzeichnet, dass** die Aussparung (19) der Aufnahmeeinheit (4) randseitig Rastelemente (20) aufweist, so dass der Satelliten-Datenträger (2) klemmend in der Aussparung (19) des Basis-Datenträgers (3) gehalten ist.

9. Passdokument nach einem der Ansprüche 1 bis 8, **dadurch gekennzeichnet, dass** die Aussparung (19) als Tasche ausgebildet ist, die die Dimension mindestens einer aufgebrachten Laminatschicht, insbesondere einer holographischen Laminatschicht, aufweist.

10. Passdokument nach einem der Ansprüche 1 bis 9, **dadurch gekennzeichnet, dass** der Basis-Datenträger (3) und der Satelliten-Datenträger (2) ein gleiches Sicherheitsmerkmal, insbesondere eine gleiche Seriennummer, aufweisen.

11. Passdokument nach einem der Ansprüche 1 bis 10, **dadurch gekennzeichnet, dass** der Basis-Datenträger (3) ein zugangsbezogenes Sicherheitsmerkmal aufweist, das eine Zugangserlaubnis bildet für den Zugriff auf den Identifikations-Chip des Satelliten-Datenträgers (2).

12. Verwendung des Passdokumentes nach einem der Ansprüche 1 bis 10 als eine Reisepasskarte.

13. Verwendung des Satelliten-Datenträgers (2) nach einem der Ansprüche 1 bis 11 als eine Personalausweiskarte.

## Claims

1. Identification document consisting of a document body with a photograph of the document bearer as a security feature and an identification chip for storing a number of features identifying the bearer of the document, **characterized by** the fact that the identification document body (1) comprises a satellite data carrier (2) including on the one hand said identification chip and on the other hand the photograph of the bearer as first security features (5) and a base data carrier (3) including at least one further security feature (11) wherein said satellite data carrier (2) is detachably connected to said base data carrier (3).

2. Identification document according to Claim 1, **characterized by** the fact that the base data carrier (3) includes a receiving unit (4) to accommodate the satellite data carrier (2) in such a way that an area of a flat side (6) of the satellite data carrier (2) that includes the first security feature (5) at least is visible while the satellite data carrier (2) is in mounted position.

3. Identification document according to Claim 1 or 2, **characterized by** the fact that the satellite data carrier (2) includes a plurality of first security features (5) to generate an independent first identifying function.

4. Identification document according to any of the preceding Claims 1 to 3, **characterized by** the fact that said first security feature (5) is disposed in such a conformity area (16) of said flat side (6) of the satellite data carrier (2) and/or the receiving unit (4) is of such design that with the satellite data carrier (2) in mounted position the first security feature (5) may be used for a second identifying function of the base data carrier (3).

5. Identification document according to any of the preceding Claims 1 to 4, **characterized by** the fact that a photograph zone (7) and/or a plain character zone (8) is disposed in the conformity area (16).

6. Identification document according to any of the preceding Claims 1 to 5, **characterized by** the fact that the satellite data carrier (2) is in a non-positive and/or positive connection with the base data carrier (3).

7. Identification document according to any of the preceding Claims 1 to 6, **characterized by** the fact that the receiving unit (4) is provided with a recess (19) whose size is adapted to the contour of the satellite data carrier (2).

8. Identification document according to any of the preceding Claims 1 to 7, **characterized by** the fact that the recess (19) of the receiving unit (4) has marginal locking elements (20) adapted to keep the satellite data carrier (2) clamped in the recess (19) of the base data carrier (3).

9. Identification document according to any of the preceding Claims 1 to 8, **characterized by** the fact that the recess (19) is in the form of a pocket whose size is at least that of an applied laminate coating, in particular a holographic coating.

10. Identification document according to any of the preceding Claims 1 to 9, **characterized by** the fact that the base data carrier (3) and the satellite data carrier (2) comprise one identical security feature, in particular an identical serial number.

11. Identification document according to any of the preceding Claims 1 to 10, **characterized by** the fact that the base data carrier (3) comprises an access related security feature in form of an access authorization that permits access to the identification chip of the satellite data carrier (2).

12. Use of the identification document according to any of the preceding Claims 1 to 10 as a passport card.

13. Use of the satellite data carrier (2) according to any of the Claims 1 to 11 as an identity card.

## Revendications

1. Document d'identité, avec un corps de document d'identité comprenant, comme caractéristique de sécurité, une photographie du propriétaire dudit document d'identité et une puce d'identification pour la mémorisation des caractéristiques, qui identifient le propriétaire dudit document d'identification, **caractérisé en ce que** le corps de document d'identité (1) comprend
- un support de données satellite (2) contenant, d'une part, la puce d'identification et, d'autre part, au moins la photographie (7) du propriétaire, en tant que première caractéristique de sécurité (5),
- un support de données de base (3) contenant au moins une deuxième caractéristique de sécurité (11),
le support de données satellite (2) étant relié de manière amovible au support de données de base (3).

2. Document d'identité selon la revendication 1, **caractérisé en ce que** le support de données de base (3) présente une unité de réception (4) pour recevoir le support de données satellite (2) de sorte qu'au moins une telle section d'un côté plat (6) du support de données satellite (2), qui contient la première caractéristique de sécurité (5), puisse être reconnue dans la position de réception du support de données satellite (2).

3. Document d'identité selon revendication 1 ou 2,
**caractérisé en ce que** le support de données satellite (2) comprend plusieurs premières caractéristiques de sécurité (5) pour la réalisation d'une première fonction d'identification indépendante.

4. Document d'identité selon l'une des revendications 1 à 3, **caractérisé en ce que** la première caractéristique de sécurité (5) est disposée dans une telle section de conformités (16) du côté plat (6) du support de données satellite (2) et / ou que l'unité de réception (4) est conçu de telle manière que, dans la position de réception du support de données satellite (2), la première caractéristique de sécurité (5) puisse être utilisée pour une deuxième fonction d'identification du support de données de base (3).

5. Document d'identité selon l'une des revendications 1 à 4, **caractérisé en ce que** la zone de la photographie (7) et / ou une zone de langage clair (8) sont disposées dans la section de conformités (16).

6. Document d'identité, selon l'une des revendications 1 à 5, **caractérisé en ce que** le support de données satellite (2) est relié pat adhérence ou par emboîtement au support de données de base (3).

7. Document d'identité selon l'une des revendications 1 à 6, **caractérisé en ce que** l'unité de réception (4) présente un évidement (19), dont la dimension est adaptée au contour du support de données satellite (2).

8. Document d'identité selon l'une des revendications 1 à 7, **caractérisé en ce que** l'évidement (19) de l'unité de réception (4) présente, sur le côté marginal, des éléments d'arrêt (20), de sorte que le support de données satellite (2) se trouve maintenu serré dans l'évidement (19) du support de données de base (3).

9. Document d'identité selon l'une des revendications 1 à 8, **caractérisé en ce que** l'évidement (19) est réalisé sous la forme d'une poche, qui présente la dimension d'au moins une couche de laminé appliquée, en particulier une couche de laminé holographique.

10. Document d'identité selon l'une des revendications 1 à 9, **caractérisé en ce que** le support de données de base (3) et le support de données satellite (2) présentent une même caractéristique de sécurité, en particulier un même numéro de série.

11. Document d'identité selon l'une des revendications 1 à 10, **caractérisé en ce que** le support de données de base (3) présente une caractéristique de sécurité concernant l'accès, qui représente une autorisation d'accès à la puce d'identification du support de données satellite (2).

12. Utilisation d'un document d'identité selon l'une des revendications 1 à 10, en tant que passeport.

13. Utilisation du support de données satellite (2) selon l'une des revendications 1 à 11, en tant que carte d'identité.
